(19)

Europäisches
Patentamt
European
Patent Office
Office européen
des brevets

(11) **EP 4 682 508 A1**

(12) **EUROPEAN PATENT APPLICATION**
published in accordance with Art. 153(4) EPC

(43) Date of publication:
**21.01.2026 Bulletin 2026/04**

(21) Application number: **24770030.5**

(22) Date of filing: **15.03.2024**

(51) International Patent Classification (IPC):
***G01N 15/14*** (2024.01)

(52) Cooperative Patent Classification (CPC):
**G01N 15/14**

(86) International application number:
**PCT/CN2024/081924**

(87) International publication number:
**WO 2024/188340 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 CN 202310251114**

(71) Applicant: **Thermo Fisher Scientific (Shanghai)
Instruments Co., Ltd.
Shanghai 201206 (CN)**

(72) Inventors:
• **DENG, Shouquan**
  **Shanghai 201206 (CN)**
• **WU, Shenghai**
  **Shanghai 201206 (CN)**
• **HUANG, Maoxiang**
  **Shanghai 201206 (CN)**

(74) Representative: **Boult Wade Tennant LLP
Salisbury Square House
8 Salisbury Square
London EC4Y 8AP (GB)**

(54) **SHEATH FLUID SUPPLY SYSTEM, FLOW CYTOMETER, AND METHOD FOR SUPPLYING SHEATH FLUID**

(57)    A sheath fluid supply system (200), a flow cytometer (1000), and a method for supplying a sheath fluid to a flow cell (110) of a flow cytometer (1000). The sheath fluid supply system (200) is applied to the flow cytometer (1000), and comprises a first container (210), a supply pipeline, a peristaltic pump (240), and a cushioning module; the supply pipeline comprises a first pipeline (252) and a second pipeline (254); the cushioning module comprises a second container (220) and an outflow pipeline (230); a predetermined volume of gas is sealed within the second container (220); the first pipeline (252) is configured such that the first container (210) is in fluid communication with the second container (220); the second pipeline (254) is configured such that the second container (220) is in fluid communication with the flow cell (110); the peristaltic pump (240) is provided on the first pipeline (252); a first part of sheath fluid in the second container (220) flows to the flow cell (110) by means of the second pipeline (254); one end of the outflow pipeline (230) is connected to the second container (220); while the first part of sheath fluid in the second container (220) flows to the flow cell (110), a second part of sheath fluid in the second container (220) can flow out of the second container (220); during pumping of the peristaltic pump (240), the flow rate of the second part of sheath fluid is greater than that of the first part of sheath fluid. Thus, the use of the peristaltic pump (240) can greatly reduce the flow fluctuation of the sheath fluid flowing to the flow cell (110).

FIG. 2

## Description

### Technical Field

The present invention relates to the field of cell detection and analysis technology. Specifically, the present invention first relates to a sheath fluid supply system for a flow cytometer, which is configured to supply sheath fluid to a flow cell of the flow cytometer.

In addition, the present invention also relates to a flow cytometer including a sheath fluid supply system and a flow cell.

Moreover, the present invention further relates to a method for supplying sheath fluid to a flow cell of a flow cytometer.

### Background

In the field of cell detection and analysis, cells or particles to be detected are often prepared as a single-cell or particle suspension which serve as a sample fluid. Then, the cell flow or particle flow to be detected is directed through a small orifice where the detection is carried out by optical or electrical methods. For example, the cell flow or particle flow to be detected passes through the laser-focused light spot and is excited to emit fluorescence for analysis, so as to obtain information on the quantity, volume, and internal characteristics of the cells or particles. Before the sample fluid passes through the small orifice, a carrier fluid (or sheath fluid) can be introduced to wrap or envelop (surround) the sample fluid. This ensures that the cells or particles are at the center of the small orifice when they line up to pass through the small orifice, facilitating optical or electrical detection.

Generally, this detection method is referred to as flow cytometry, and the system that implements this detection method is called a flow cytometer. Capable of performing multi-parameter, quantitative analysis or sorting of cells or biological particles in a fast-flowing state, flow cytometers have been widely used in fields such as clinical medicine, cytology, biology, and microbiology, and is known as the CT of cell biology laboratories.

Based on the above principles, it can be known that a flow cytometer generally includes a fluid (liquid) flow system, an optical system, and an electronic and signal processing system. The fluid flow system at least includes a sample fluid supply system, a sheath flow supply system, a waste fluid discharge system, etc. For example, after preparing the cells or particles to be detected into a sample fluid, they can be labeled with fluorescent dyes and placed in a sample fluid container, and the sample fluid is made to flow towards the flow cell under pumping pressure. The sheath fluid, as a matrix fluid to assist in sample fluid detection, wraps (envelops) around the sample fluid, keeping the sample fluid at the center of the flow cell, thereby ensuring the accuracy of the detection. For example, if the sample fluid, or the cells or particles to be detected, is not at the center, it will cause an unfavorable situation where at least a part of them will not be covered by the laser-focused light spot. In addition, the sheath fluid helps to prevent the cells in the sample fluid from approaching the nozzle wall and clogging the nozzle. Finally, the sample fluid and the sheath fluid are combined in the flow cell and then discharged from it to form waste fluid.

Therefore, the stability of the sheath flow supply of the sheath flow supply system, such as the stability of the sheath fluid flow rate, has a direct impact on the detection results. In particular, in a flow cytometer, a linear flow rate of 8-15 meters per second usually needs to be formed. At such a high flow rate, even a slight fluctuation may cause a large deviation in the detection results, such as errors in signal sampling and processing. The high flow rate of the sheath flow ensures sufficient separation between the signal peaks from individual cells or particles to be detected, preventing overlap-induced degradation in the detection precision.

To ensure the high stability of the sheath flow supply, high-precision pumps are usually used in the prior art to pump this sheath fluid. However, such high-precision pumps are usually very expensive, costing tens of thousands of RMB (yuan) per pump. In the prior art, low-cost peristaltic pumps are alternatively used. However, since peristaltic pumps generate pulsed flow during operation, pulsation also occurs in the sheath fluid supply, which is very critical for the analysis of detection signals. Especially for flow cytometers with cell sorting capabilities, when a target cell is detected, the target cell needs to be captured at a downstream position of the flow channel (for example, forming droplets). The pulsation phenomenon may even lead to capture failure. Therefore, if a peristaltic pump is used in the prior art, the flow rate of the sheath flow usually needs to be significantly reduced to mitigate the loss of detection accuracy caused by fluctuations. However, a low flow rate obviously increases the peak width and reduces the peak height of the signal of each cell, which is unfavorable for detection.

Therefore, in the field of cell detection and analysis, especially for flow cytometers, there is still a need to ensure the stability of the sheath fluid supply to improve the detection accuracy with a simple structure and low cost when using a peristaltic pump for pumping.

## Summary of the Invention

The present invention provides a sheath fluid supply system for a flow cytometer. The sheath fluid supply system may include: a first container configured to contain a sheath fluid (liquid); a supply line which is arranged between the first container and a flow cell and may include a first line and a second line; a peristaltic pump configured to pump the sheath fluid; a buffer module which may include: a second container in which a predetermined volume of gas is sealed, where the first line may be arranged to allow the first container to be in fluid communication with the second container, the second line is arranged to allow the second container to be in fluid communication with the flow cell, the peristaltic pump may be arranged on the first line to pump the sheath fluid from the first container to the second container, and a first part of sheath fluid in the second container can flow towards the flow cell via the second line; and an outflow line, one end of which may be connected to the second container such that while the first part of sheath fluid flows towards the flow cell, a second part of sheath fluid in the second container can flow out of the second container; where during pumping of the peristaltic pump, a flow rate of the second part of sheath fluid is greater than a flow rate of the first part of sheath fluid.

The sheath fluid supply system described above can greatly reduce the fluctuation of the flow rate of the sheath fluid flowing towards the flow cell (that is, improve the precision of the flow rate of the sheath fluid) using an inexpensive peristaltic pump, and can increase the flow rate of the sheath fluid flowing towards the flow cell in a short period of time (e.g., the time required to double the flow rate is kept short).

Preferably, the other end of the outflow line that is away from the second container may extend into the first container to allow the second part of sheath fluid to flow into the first container. In this way, the existing containers in the sheath fluid supply system can be used to provide pressure relief points, which keeps the structure of the system compact and also enables the sheath fluid to continue to recirculate (or even for use in other subsequent procedures such as cleaning), thereby reducing costs.

In particular, the other end of the outflow line that is away from the second container may be in communication with the atmosphere. In this case, pressure relief points can be simply provided, which is conducive to increasing the flow rate in the outflow line and keeps the structure of the system simple.

In some embodiments, the outflow line is designed such that the flow rate of the second part of sheath fluid may be 1.5 to 5 times of the flow rate of the first part of sheath fluid, or the outflow line is designed such that the flow rate of the second part of sheath fluid may account for 60% to 90% of the total flow rate of the sheath fluid pumped into the second container by the peristaltic pump.

The above flow rate design allows the fluctuation of the pump flow rate in the peristaltic pump to be rapidly absorbed by the second part of sheath fluid, which suppresses the fluctuation of the flow rate of the first part of sheath fluid flowing towards the flow cell, and enables rapid increase of the pump speed to increase the flow rate of the first part of sheath fluid in a short period of time.

Preferably, the predetermined volume may account for 4% to 60% of the total volume of the second container. The ratio of the predetermined volume allows for good suppression or buffering of the fluctuation of the flow rate of the first part of sheath fluid flowing towards the flow cell, and avoids excessively long flow rate switching time.

In some embodiments, the second container may be provided with an inflow port in the sheath fluid-containing section, the first line may be arranged to extend into the second container via the inflow port, and an end of the first line within the second container is located in the gas-sealed section of the second container, and the sheath fluid can flow into the second container from the end.

Since the first line extends into the second container via the inflow port at the sheath fluid-containing section of the second container, it is possible to omit the provision of an inflow port in the gas-sealed section at the top of the second container, which would otherwise cause leakage of the gas sealed in the second container. In other words, the sealing effect can be achieved by means of the existing sheath fluid in the second container.

For example, the second container may be provided with a first outflow port in the sheath fluid-containing section, and the outflow line may extend out of the second container from the first outflow port. For another example, the second container may be provided with a second outflow port in the sheath fluid-containing section, and the second line extends from the second outflow port.

The arrangement of the first outflow port and/or the second outflow port in the sheath fluid-containing section of the second container can also achieve the sealing effect by means of the existing sheath fluid in the second container.

In particular, the first container may include an outflow port disposed at its bottom, the first line may extend from the outflow port to the inflow port of the second container, and a first filter device may be provided at the outflow port of the first container for filtering the sheath fluid flowing towards the peristaltic pump. For still another example, a second filter device may be provided at the second outflow port of the second container for filtering the sheath fluid flowing from the second container towards the flow cell.

The provision of the filter devices can filter off impurities in the sheath fluid to improve the flow-through performance of the flow path and to reduce the impact of unnecessary impurities on the high-precision flow rate of the sheath fluid.

In addition, the present invention further provides a flow cytometer. The flow cytometer may include the sheath fluid supply system described above and a flow cell. The sheath fluid supply system is configured to supply a sheath fluid to the flow cell.

The flow cytometer of the present invention can supply to the flow cell the sheath fluid at a high linear velocity and extremely small fluctuation, so as to ensure the detection accuracy of a sample fluid.

The present invention provides a method for supplying a sheath fluid to a flow cell of a flow cytometer. The flow cytometer may include a first container and a second container which are configured to contain a sheath fluid, and a peristaltic pump arranged between the first container and the second container, wherein a predetermined volume of gas may be sealed in the second container. The method comprises: pumping the sheath fluid from the first container to the second container by the peristaltic pump, such that a first part of sheath fluid in the second container flows towards the flow cell, while a second part of sheath fluid in the second container flows from the second container towards the first container or a sheath fluid collection device, wherein during pumping of the peristaltic pump, a flow rate of the second part of sheath fluid is greater than a flow rate of the first part of sheath fluid.

The above method can greatly reduce the fluctuation of the flow rate of the sheath fluid flowing towards the flow cell (that is, improve the precision of the flow rate of the sheath fluid) using an inexpensive peristaltic pump, and can increase the flow rate of the sheath fluid flowing towards the flow cell in a short period of time.

Preferably, the flow cytometer may include an outflow line, such that while the first part of sheath fluid flows towards the flow cell, the second part of sheath fluid may flow out of the second container via the outflow line, wherein an end of the outflow line away from the second container may be in communication with the atmosphere or extend into the sheath fluid collection device. The arrangement of the outflow line can use a simple structure to achieve suppression or buffering of the fluctuation of the pump flow rate.

In particular, the flow rate of the second part of sheath fluid may be 1.5 to 5 times of the flow rate of the first part of sheath fluid, or the flow rate of the second part of sheath fluid may account for 60% to 90% of the total flow rate of the sheath fluid pumped into the second container.

The above flow rate design allows the fluctuation of the pump flow rate in the peristaltic pump to be rapidly absorbed by the second part of sheath fluid, which suppresses the fluctuation of the flow rate of the first part of sheath fluid flowing towards the flow cell, and enables rapid increase of the pump speed to increase the flow rate of the first part of sheath fluid in a short period of time.

In some embodiments, the flow rate of the first part of sheath fluid may be changed by means of the peristaltic pump, and the flow resistance and/or predetermined volume of the outflow line may be designed such that the time required to double or halve the flow rate of the first part of sheath fluid is less than 5 minutes.

According to the present invention, the flow rate of the first part of sheath fluid in the flow cell can be changed by changing the pump flow rate, and the design for the outflow rate (e.g., for the flow resistance of the outflow line) and/or for the predetermined volume of the gas sealed in the second container can shorten the time required to change, especially double or halve, the flow rate to be less than 5 minutes, for example, less than 3 minutes, 2 minutes, or 1 minute.

For example, the flow rate of the first part of sheath fluid may be in a range of 0.5-15 milliliters per minute (which may be varied according to detection requirements). This flow rate variation range is flexible, and can be achieved with high precision according to the present invention.

**Brief Description of the Drawings**

FIG. 1 shows an overall flow circuit diagram of a flow cytometer according to an embodiment of the present invention;
FIG. 2 shows a flow circuit diagram of a sheath fluid supply system according to the embodiment of FIG. 1;
FIG. 3 shows a graph of a pump flow rate, as a function of time, of the sheath fluid supply system at different speeds of a peristaltic pump according to an embodiment of the present invention;
FIG. 4 shows a graph of a flow rate in a flow cell of a flow cytometer as a function of time when no gas is sealed in a second container;
FIG. 5 shows a graph of a flow rate in a flow cell and a flow rate in an outflow line as a function of time at different pump speeds according to an embodiment of the present invention; and
FIG. 6 shows a graph of a flow rate in a flow cell as a function of time at different pump speeds according to an embodiment of the present invention.

List of reference signs:

1000     Flow cytometer;
110     Flow cell;
120     Detection device;
200     Sheath fluid supply system;
210     First container;
220     Second container;
230     Outflow line;
240     Peristaltic pump;
252     First line;
254     Second line;
262     First filter device;
264     Second filter device;
300     Capillary device;
400     Sample feeding device;
500     Sample loop;
600     Waste liquid container.

## Detailed Description of Embodiments

The present invention relates to the fields of cell detection and analysis. Specifically, the present invention relates to a flow cytometer, and in particular to a sheath fluid supply system for a flow cytometer. Flow cytometer is a detection and analysis instrument that performs high-speed, cell-by-cell, multi-parameter quantitative analysis on individual cells or other particles in a sample suspension by detecting light signals (such as scattered light signals and fluorescence signals).

It should be noted that although the fluid flow system described in the present invention is a sheath fluid supply system that supplies a sheath fluid (also referred to as a carrier fluid) for encapsulating a sample fluid, the supply system based on the present invention can also be applied to other instruments and equipment in the fields of biological and chemical detection and analysis, as long as it is necessary to ensure the fluid flow stability at high flow velocities in these instruments and equipment.

In the present invention, the term "container" refers to a vessel that can contain at least a liquid, and is not limited in the form, which may include, for example, a tank, a box, a barrel, a vat, etc. According to different specific requirements, the container may be sealed, for example, having a substance (such as air) sealed in the container, or may be non-sealed, for example, in communication with the atmosphere. A sealed container does not exclude including ports in communication with the outside, such as an inflow port, an outflow port, a compensation port, an observation window or access window, etc.

In the present invention, the term "line" refers to an accommodating structure for fluid connection, with no restrictions on cross-sectional shape, flexibility/rigidity, or linearity/curvature, and with physical parameters, such as length, inner diameter and roughness, especially those related to the flow resistance, can be designed according to specific requirements. It should be noted that although the present invention describes using a line to achieve fluid communication between two components or devices, the present invention does not exclude the presence of additional fluid components, such as valves and fluid connectors that facilitate flow control, between the two components or devices.

In the present invention, the term "flow rate" primarily refers to a volumetric flow rate (i.e., volume per unit time), but does not exclude mass flow rate. This term is intentionally distinguished from "flow velocity", which primarily refers to the linear velocity of a fluid (the distance the fluid travels per unit time).

In the present invention, the term "between" refers to the positioning of a device or component in a flow path. Moreover, the term "upstream/downstream of ..." is defined relative to a flow direction of a fluid, "upstream of ..." means a position prior to the device or component in the flow direction, and "downstream of ..." means a position subsequent to the device or component in the flow direction.

A flow cytometer 1000 according to the present invention includes at least a sample fluid (or sample) supply system and a sheath fluid supply system 200. Specifically, the sample fluid supply system is configured to supply a sample fluid from a sample fluid container to a flow cell 110 for detection of cells or particles in the sample fluid. The sheath fluid supply system 200 is configured to supply a sheath fluid to the flow cell 110 to enable the sample fluid to be in a favorable state suitable for detection before entering the flow cell 110. For example, the sample fluid can enter the flow cell 110 at a high flow velocity, especially a high linear velocity, by means of a high-velocity sheath flow, resulting in narrow and high peaks of the detected cells or particles spaced sufficiently apart from each other. For another example, when entering a channel in the flow cell 110, the cells or particles in the sample fluid may be positioned centrally by means of the sheath fluid to facilitate being detected, rather than positioned peripherally.

However, it should be understood that the flow cytometer 1000 according to the present invention may further include, in addition to the sample fluid supply system and the sheath fluid supply systems 200 mentioned above, devices or components such as the flow cell 110, a detection system, a waste liquid discharge system, a cleaning system, and a control system. Since these systems are not the focus of the present invention, detailed descriptions of these systems, such as how the sheath fluid encapsulates the sample fluid and how the detection system detects the sample fluid, are omitted herein.

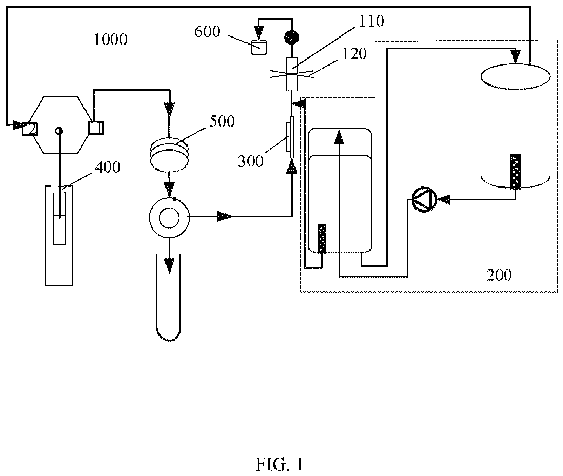

FIG. 1 shows an overall flow circuit diagram of a sample fluid supply system according to an embodiment. A sample fluid is injected into a sample loop 500 by means of a sample feeding device 400 (e.g., including a high-precision syringe pump) and can be stored in the sample loop as needed. The sample loop may also be referred to as a buffer loop, a storage loop, a quantitative loop and so on. The sample fluid may be dispensed from the sample loop 500 to a capillary device 300 (e.g., a PZT capillary tube) at a specified flow rate or flow velocity, for example, 10-1000 microliters per minute, especially 200 microliters per minute. It should be noted that, prior to the capillary device 300, the sample fluid supply system may include no sample loop, or even include no storage device at all, allowing direct feeding from the sample container or online direct supply to the flow cell 110.

In the flow cytometer, the sample fluid enters the flow cell 110 along with the sheath fluid at a high linear velocity (e.g., 8-15 meters per second), where the cells or particles in the sample fluid are positioned centrally in the channel to better facilitate detection by an optical or photoelectric detection device 120, such as a laser device, located external to the flow cell 110. The specific detection method will not be described in detail herein.

Upon completion of the detection, the sample fluid and the sheath fluid are discharged together into a waste liquid container 600. In some embodiments, upon completion of detection, the sheath fluid may also be used to clean the sample loop 500 and the capillary device 300. To perform cleaning, a line may extend out of a first container that contains the sheath fluid (which will be described in detail below) to a port of a sample fluid pump (see FIG. 1, for example), or extend out of the first container to a suitable position in a flow path of the sample fluid supply system prior to a component to be cleaned.

In the present invention, the sheath fluid may merge with the sample fluid at a suitable position, typically downstream of the capillary device 300 (as viewed in the flow direction of the sample fluid), before the sample fluid enters the flow cell 110. The suitable position is, for example, at an extremely short distance, such as 0-10 millimeters, upstream of the flow cell 110. Therefore, in the present invention, it can be considered that the flow rate of the sheath fluid supplied towards the flow cell 110 by the sheath fluid supply system 200 is approximately equivalent to the flow rate of the sheath fluid carrying the sample fluid in the flow cell 110.

The sheath fluid supply system 200 of the present invention firstly includes a first container 210 for containing a sheath fluid. The whole or part of the first container 210 may be filled with the sheath fluid. The interior of the first container 210 may be in communication with the atmosphere, for example, directly or by means of a structure such as a filter device. In order to filter off impurities in the sheath fluid to reduce the possibility of blockage of the flow path, the sheath fluid may be filtered, before flowing out of the first container 210, by means of a first filter device 262 arranged at an outflow port of the first container 210, for example. The outflow port is preferably arranged at the bottom of the first container 210, which is not restrictive, and for example, may also be arranged in a sheath fluid-containing section of the first container 210. In the embodiment shown in FIG. 1, the first filter device 262 may be arranged on an inner side of the bottom of the first container 210, or at other positions, such as a position outside the first container 210, but typically upstream of a peristaltic pump 240.

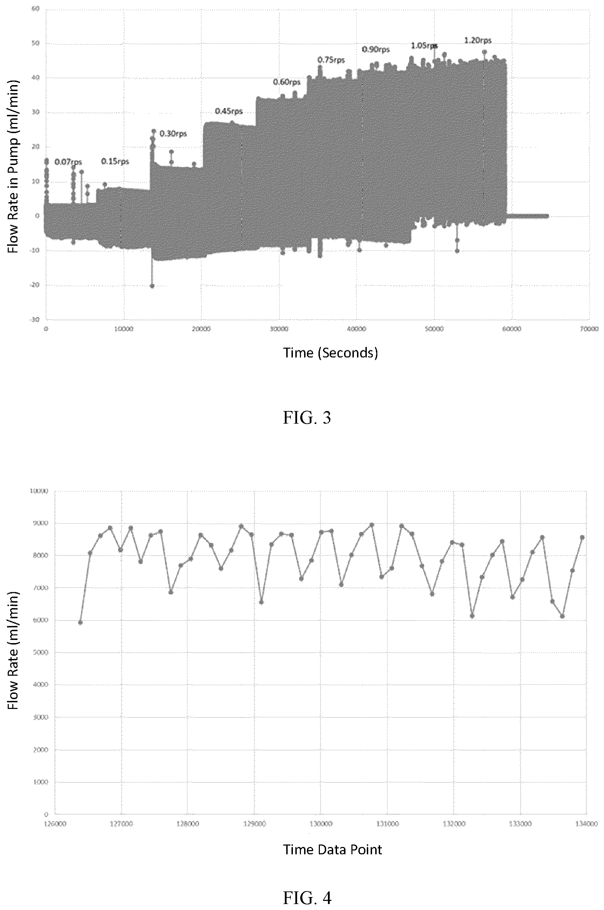

The sheath fluid supply system 200 further includes the peristaltic pump 240. An inexpensive peristaltic pump can be used herein instead of expensive high-precision pumps such as a syringe pump. For example, the peristaltic pump includes a pump case, a roller (or referred to as a rolling wheel), and an elastic hose which is mounted in the pump case and is squeezed by the rolling wheel to form a closure cutoff point that moves with the roller during rotation of the roller. The elastic hose restores to its natural state after the roller leaves, and a vacuum is created in the hose, such that the fluid is drawn in and is then squeezed out by the next roller. At a fixed speed, the flow rate in the peristaltic pump fluctuates greatly (see FIG. 3), so that using only the peristaltic pump in the sheath fluid supply system 200 usually cannot meet the high-precision requirement for the flow rate of the sheath fluid. The speed of the peristaltic pump may be adjusted as needed, for example, to 0.07-1.2 rps (revolutions per second). In a specific example, the peristaltic pump can pump a volume of about 0.3 milliliters of the sheath fluid per revolution.

The sheath fluid supply system 200 may include a supply line which supplies the sheath fluid from the first container 210 to the flow cell 110 of the flow cytometer 1000 (or to a suitable position, such as 0-10 millimeters prior to the flow cell 110), and is thus arranged between the first container 210 and the flow cell 110. The supply line of the present invention may include a first line 252 and a second line 254, the peristaltic pump is arranged on the first line 252 that extends from the first container 210, and the second line 254 extends to the flow cell 110 (or to a suitable position prior to the flow cell 110).

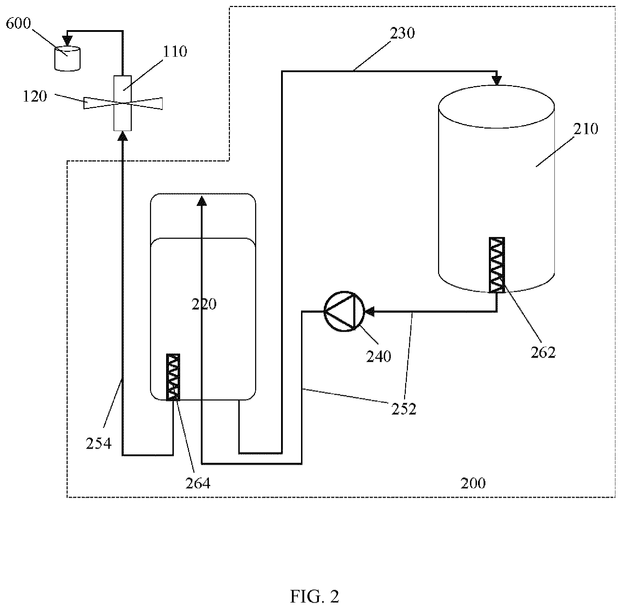

To buffer the fluctuation of the flow rate of the pumped sheath fluid, the sheath fluid supply system 200 may include a buffer module. The buffer module may include a second container 220. FIG. 2 shows the second container 220 disposed separately from the first container 210. The first line 252 is arranged to allow the first container 210 to be in fluid communication with the second container 220, and the second line 254 is arranged to allow the second container 220 to be in fluid communication with the flow cell 110. In other words, the second container 220 may be regarded as a device in the flow path from the first container 210 to the flow cell 110.

At this point, the peristaltic pump 240 may be arranged on the first line 252 to pump the sheath fluid from the first container 210 to the second container 220. A part of sheath fluid in the second container 220, which may be referred to as a first part of sheath fluid, flows from the second container 220 towards the flow cell 110 via the second line 254. For example, the flow rate of the first part of sheath fluid may be 0.5-15 milliliters per minute. In a specific example, the second line 254 may have an inner diameter of 0.5 millimeters, an outer diameter of 1.6 millimeters, and a length of 840 millimeters. The present invention does not exclude the arrangement of the second line 254 including a bifurcation or a plurality of sub-lines. It should be understood that in the present invention, if the sheath fluid flows out of the second container 220 without passing through the second line 254, the sheath fluid will not flow towards the flow cell 110.

A predetermined volume of gas, such as air, is sealed in the second container 220. Preferably, the predetermined volume may account for 4% to 60% of the total volume of the second container 220. For example, when the total volume of the second container 220 is about 250 milliliters, 10-150 milliliters of gas may be sealed in the second container. When the peristaltic pump 240 is used to pump the sheath fluid, the fluctuation of the pump flow rate may be at least partially suppressed or buffered by means of the gas sealed in second container 220.

The inventors have noted that the stability of the flow rate of the sheath fluid flowing towards the flow cell 110 is correlated with the volume of the gas sealed in the second container 220. When there is a large predetermined volume of gas, a better buffering effect is achieved, that is, during pumping of the peristaltic pump 240, the fluctuation of the flow rate of the first part of sheath fluid flowing from the second container 220 towards the flow cell 110 can be significantly reduced compared with the fluctuation of the pump flow rate.

According to the Clapeyron equation (i.e., the ideal gas state equation): $PV = nRT$. In other words, on the premise of constant temperature and constant gas, the product of P and V is a constant. Thus, this formula can be obtained:

$$P = \frac{P_0 V_0}{V}$$

Moreover, $\Delta P = P - P_0 = \frac{P_0 V_0}{V} - P_0 = P_0 \frac{V_0 - V}{V}$, where $V_0$ is greater than or equal to V.

Further, it is known that the relationship between a pressure difference in the capillary device 300 and the flow rate of the fluid is:

$$F = \left(\frac{\Delta P}{K_f}\right)^{1/2}$$

By substituting the aforementioned equation for ΔP into the above formula, the following formula can be obtained:

$$F = \sqrt{\frac{P_0}{K_f}} \sqrt{\frac{V_0 - V}{V}}.$$

Then, by taking the derivative of the above formula, the following formula can further be obtained:

$$\frac{dF}{F} = \frac{d\left(\sqrt{\frac{P_0}{K_f}} \sqrt{\frac{V_0 - V}{V}}\right)}{F}$$

$$= \left(-\frac{V_0 \sqrt{\frac{P_0}{K_f}}}{2\sqrt{(V_0 V - V^2)}} \times \frac{dV}{V}\right) / \left(\sqrt{\frac{P_0}{K_f}} \sqrt{\frac{P_0(V_0 - V)}{V}}\right)$$

$$= -\frac{V_0}{2(V_0 - V)} \frac{dV}{V}$$

where P is pressure in Pa (Pascal); V is a gas volume at a specified flow rate in $m^3$ (cubic meter), and $V_0$ is an initial gas volume in the second container 220; F is the flow rate in ml/min (milliliter per minute); n is the amount of substance of the gas in moles; T is the temperature in Kelvin; R is a constant, about 8.314 J/(mol·K); and $K_f$ is the flow resistance.

As can be seen from the above formula $\frac{dF}{F} = -\frac{V_0}{2(V_0 - V)}\frac{dV}{V}$, the gas volume in the second container 220 and its amount of change (i.e., the ratio of the instantaneous (e.g., 1 second or shorter) change *(dV)* in gas volume in the second container 220 to the gas volume V in the second container 220) can represent the fluctuation of the flow rate of the sheath fluid flowing from the second container 220 towards the flow cell 110. Specifically, the larger the gas volume $V_0$ in the second container 220 is, the better the flow stability of the sheath fluid (flowing towards the flow cell 110) is (i.e., the smaller the dF/F is).

However, when it is desired that the flow rate in the flow cell 110 changes from the first flow rate to the second flow rate, for example, from 5 milliliters per minute to 10 milliliters per minute, the time required for this process (also known as switching time) needs to be considered. The inventors have found that a larger predetermined volume may make this process take quite a long time, for example, more than half an hour. This is apparently unacceptable when it is necessary to switch to the desired flow rate of the sheath fluid supplied to the flow cell 110 in a short period of time. Conversely, a shorter switching time requires a smaller predetermined volume of gas. Considering at least the buffering effect on the flow rate of the sheath fluid and the switching time, the inventors have designed the predetermined volume to be 10-150 milliliters (assuming that the total volume of the second container 220 is 200 milliliters, the second container 220 of other volumes may be varied according to the corresponding ratio, for example, 4% to 60%, or 5% to 55%). The correlation between the switching time and the predetermined volume of gas in the second container 220 will be further explained below.

The buffer module of the sheath fluid supply system 200 of the present invention may further include an outflow line 230. The term "outflow line 230" herein refers to a line that allows the second part of sheath fluid to leave the second container 220, that is, one end of the outflow line is connected to the second container 220. Regardless of whether the sheath fluid returns to the first container 210 or whether the other end of the outflow line is in communication with air, it is referred to as an outflow line 230 (which may also be referred to as a return line when directing the sheath fluid back into the first container 210).

As described above, while the first part of sheath fluid flows towards the flow cell 110, the second part of sheath fluid in the second container 220 can flow from the second container, preferably via the outflow line 230. However, other fluid structures are also conceivable. In the present invention, the second part of sheath fluid flowing out of the second container 220 is strictly distinguished from the first part of sheath fluid flowing from the second container 220, that is, the second part of sheath fluid does not flow towards the flow cell 110, and the first part of sheath fluid flows towards the flow cell 110.

Since one end of the outflow line 230 is in fluid communication with the second container 220, while the first part of sheath fluid flows towards the flow cell 110, the second part of sheath fluid in the second container 220 can flow out of the second container, without substantially requiring other artificial or manual operations. The outflow line 230 may be designed to allow the flow rate of the second part of sheath fluid to be greater than the flow rate of the first part of sheath fluid during pumping of the peristaltic pump 240. For example, the flow resistance of the outflow line 230 is designed to be significantly lower than the flow resistance of the second line 254, such that most of the sheath fluid flowing out of the second container 220 flows via the outflow line, and a small part of sheath fluid flows towards the flow cell 110 via the second line 254.

Preferably, the end of the outflow line 230 away from the second container 220 does not need to be connected to other fluid functional components such as a fluid pump, but allows the second part of sheath fluid to finally flow out only through the outflow line 230, that is, it is not necessary to be in communication with a fluid functional component, such as a fluid pump, or to flow towards the fluid functional component. In some embodiments, the end of the outflow line 230 away from the second container 220 is in direct communication with the atmosphere, for example, suspended in the air-containing section of the first container 210, or is directly exposed to the atmosphere in other ways. In other embodiments, the end of the outflow line 230 away from the second container 220 is immersed in the sheath fluid or other liquids, for example, the end of the outflow line 230 away from the second container 220 directly extends into the sheath fluid in the first container 210. In addition, the end of the outflow line 230 away from the second container 220 may be connected to a sheath fluid collection device. The sheath fluid collection device herein may refer to any container that contains the sheath fluid. The container may be open or closed, and may be in the shape of tube, tank, basin, dish, capsule, bag, or any other suitable form.

The end of the outflow line of the present invention that leads out the second part of sheath fluid (i.e., the end connected to the second container) typically acts as a pressure stabilization location and is therefore not suitable on the first line, that is, not suitable for directly leading out a part of the sheath fluid from the first line.

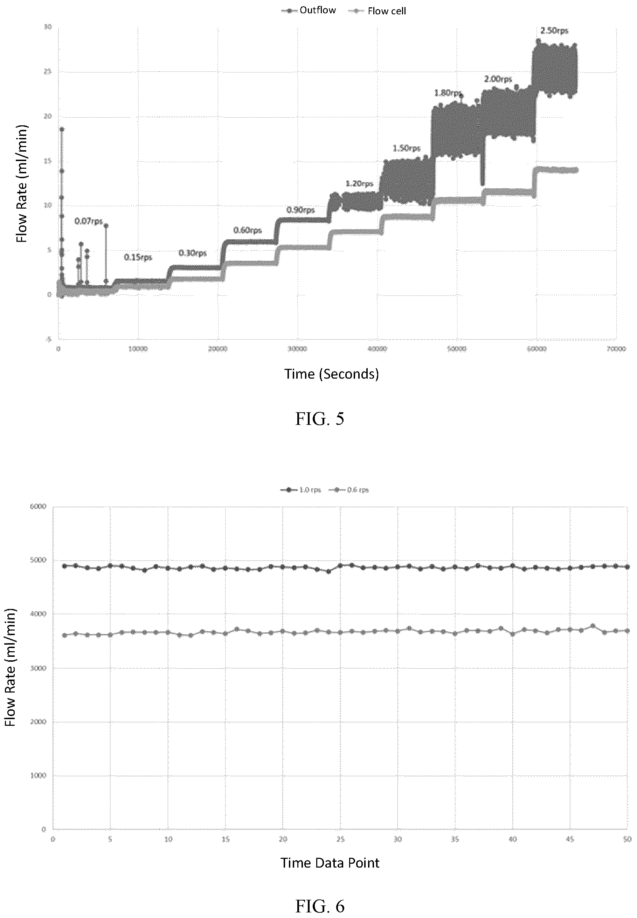

The inventors have creatively found that the stability of the flow rate of the first part of sheath fluid on the second line 254 is directly correlated with the flow rate of the second part of sheath fluid. Specifically, firstly, the flow rate of the first part of sheath fluid is correlated with the change in gas pressure in the second container 220, and the change in gas pressure is also correlated with the flow rate of the second part of sheath fluid (e.g., the flow resistance of the outflow line 230). Therefore, during pumping of the sheath fluid from the first container 210 to the second container 220 by the peristaltic pump 240, the flow rate of the second part of sheath fluid flowing out of the second container 220 can directly affect the change in flow rate (i.e., the degree of fluctuation) of the first part of sheath fluid flowing towards the flow cell 110. Secondly, when it is necessary to switch the flow rate, such as double the flow rate of the first part of sheath fluid, the pump flow rate in the peristaltic pump 240 needs to be increased. In this case, the gas pressure in the second container 220 is increased rapidly, but the flow velocity of the second part of sheath fluid fluctuates earlier than the flow velocity of the first part of sheath fluid flow, achieving the effect of primarily sharing the fluctuation in the peristaltic pump 240, as shown in FIG. 5. Since the second part of sheath fluid will flow out of the second container 220, there is a possibility of increasing the speed of the peristaltic pump 240, so as to shorten the time for switching the flow rate, otherwise, at a low pump speed, it will take a long time to double the flow rate of the first part of sheath fluid flowing towards the flow cell 110.

In some embodiments, the outflow line 230 may have an inner diameter of 0.8 millimeters, an outer diameter of 1.6 millimeters, and a length of 1410 millimeters. In other embodiments, the outflow line 230 may have an inner diameter of 0.8 millimeters, an outer diameter of 1.6 millimeters, and a length of 580 millimeters. In still other embodiments, the outflow line 230 may have an inner diameter of 0.5 millimeters, an outer diameter of 1.6 millimeters, and a length of 534 millimeters.

However, it should be understood that in order to make the flow rate of the second part of sheath fluid greater than the flow rate of the first part of sheath fluid, in addition to designing the flow resistance of the flow line 230, the design of the other end of the outflow line 230 opposite to the end connected to the second container 220 is also conceivable.

In a preferred embodiment, the other end of the outflow line 230 may be in direct communication with the atmosphere to provide a pressure relief point, such that the second part of sheath fluid in the second container 220 can easily flow out. Even, the other end of the outflow line 230 may be associated with other pressure equipment to provide a suitable lower pressure, which is not preferred.

In a more preferred embodiment, the other end of the outflow line 230 may extend directly back into the first container 210 to allow the second part of sheath fluid to flow into the first container 210, such that the sheath fluid can continue to recirculate, which is not a necessary option for buffering the fluctuation of the sheath fluid.

In the present invention, it is particularly preferred that the outflow line 230 may be designed such that the flow rate of the second part of sheath fluid is 1.5 to 5 times of the flow rate of the first part of sheath fluid, or the outflow line 230 may be designed such that the flow rate of the second part of sheath fluid accounts for 60% to 90% of the total flow rate of the sheath fluid pumped into the second container 220 by the peristaltic pump 240.

Assuming $F_{outflow} = \alpha F_{flow\,cells}$ where $\alpha$ is a flow rate multiple between the second part of sheath fluid and the first part of sheath fluid. Preferably, $\alpha$ is 1.5 to 5.

Assuming that the flow rate of the second part of sheath fluid and the flow rate of the first part of sheath fluid are mainly determined by the flow resistances of the outflow line 230 and the second line 254, respectively, that is,

$$K_{outflow} = \frac{1}{\alpha} K_{flow\,cell}.$$

$$V_0 - V = \frac{V_0 F_{total}^2}{F_{total}^2 + P_0 \left( \frac{1}{\sqrt{K_{flow\,cell}}} + \frac{1}{\sqrt{K_{outflow}}} \right)^2}$$

$$= \frac{V_0}{1 + \frac{P_0 \left( \frac{1}{\sqrt{K_{flow\,cell}}} + \frac{1}{\sqrt{K_{outflow}}} \right)^2}{F_{flow\,cell}^2 (1+\alpha)^2}}$$

$$= \frac{V_0}{1 + \frac{P_0 \left( \frac{1}{\sqrt{K_{flow\,cell}}} + \frac{\sqrt{\alpha}}{\sqrt{K_{flow\,cell}}} \right)^2}{F_{flow\,cell}^2 (1+\alpha)^2}}$$

$$= \frac{V_0}{1 + \frac{P_0}{K_{flow\,cell} * F_{flow\,cell}^2} * \left( \frac{1+\sqrt{\alpha}}{1+\alpha} \right)^2}$$

As can be seen from the above equations, as $\alpha$ increases, $\left( \frac{1+\sqrt{\alpha}}{1+\alpha} \right)^2$ decreases, and $V_0 - V$ becomes larger, so that the buffering effect is more obvious.

As shown in FIG. 2, in a preferred embodiment, the second container 220 may be provided with an inflow port in the sheath fluid-containing section, the first line 252 is arranged to extend into the second container 220 via the inflow port, and an end of the first line 252 located in the second container is located in the section of the second container 220 in which the gas is sealed, such that the sheath fluid flows into the second container 220 from the end.

If the inflow port is disposed at the top of the second container 220, as the usage time increases, although it is designed to have a sealed upper portion, the inflow port may still cause the gas sealed in the second container 220 to escape from the second container 220 via tiny gaps at the connection around the inflow port. This may result in a decrease in the gas sealed in the second container 220, which has an impact on buffering the fluctuation of the flow rate. In contrast, if the inflow port is disposed in the sheath fluid-containing section, especially in the bottom region, the gas sealed in the second container 220 may be isolated from the inflow port or other outflow ports by means of the sheath fluid, thereby reducing the risk of leakage. In addition, the end of the first line 252 located in the second container 220 is disposed at the top, which can reduce the possibility of bubble generation in the sheath fluid in the second container 220.

The second container 220 may also be provided with a first outflow port in the sheath fluid-containing section, especially in the bottom region, of the second container, and the outflow line 230 extends from the second container 220 via the first outflow port. When the outflow line 230 is designed to be connected to the first container 210, the circuit line may extend from the first outflow port to the first container 210.

In addition, the second container 220 may further be provided with a second outflow port in the sheath fluid-containing section, especially in the bottom region, of the second container, and the second line 254 extends from the second outflow port, for example, to a suitable position prior to the flow cell 110 or to a flow path close to the flow cell 110.

Optionally, a second filter device 264 may be provided at the second outflow port of the second container 220 for filtering the sheath fluid flowing from the second container 220 towards the flow cell 110. The second filter device 264 may be located in the second container 220, for example, at or in the vicinity of the second outflow port at the bottom of the second container, but may also be located at a suitable position on the second line 254 outside the second container 220.

The factors related to determination of the switching time for changing the flow rate will be further explained below. Firstly, the total flow rate of the sheath fluid supplied from the first container 210 to the second container 220 is denoted as $F_{total}$. $F_{total}$ is the sum of a flow rate $F_{flow\,cell}$ of the sheath fluid flowing from the second container 220 towards the flow cell 110 and a flow rate $F_{outflow}$ of the sheath fluid flowing from the second container 220 (when the sheath fluid flowing out of the second container 220 returns to the first container 210, the flow rate may also be referred to as $F_{return}$). $F_{total}$ can generally be regarded as the average pumping flow rate of the sheath fluid pumped from the first container 210 to the second container 220 (although it may fluctuate greatly, it can be represented by the average pump flow rate $F_{pump\,average}$).

$$F_{\text{total}} = F_{\text{flow cell}} + F_{\text{outflow}}$$

$$= \sqrt{P_0}\left(\frac{1}{\sqrt{K_{\text{flow cell}}}} + \frac{1}{\sqrt{K_{\text{outflow}}}}\right)\sqrt{\frac{V_0 - V}{V}}$$

Then, squaring both sides of the above equation, the following equation can be obtained:

$$\left(\frac{F_{\text{total}}}{\sqrt{P_0}\left(\frac{1}{\sqrt{K_{\text{flow cell}}}} + \frac{1}{\sqrt{K_{\text{outflow}}}}\right)}\right)^2 = \frac{V_0 - V}{V}$$

$$\left(\frac{F_{\text{total}}}{\sqrt{P_0}\left(\frac{1}{\sqrt{K_{\text{flow cell}}}} + \frac{1}{\sqrt{K_{\text{outflow}}}}\right)}\right)^2 + 1 = \frac{V_0}{V}$$

$$V = \frac{V_0 P_0\left(\frac{1}{\sqrt{K_{\text{flow cell}}}} + \frac{1}{\sqrt{K_{\text{outflow}}}}\right)^2}{T_{\text{total}}^2 + P_0\left(\frac{1}{\sqrt{K_{\text{flow cell}}}} + \frac{1}{\sqrt{K_{\text{outflow}}}}\right)^2}$$

$$V_0 - V = \frac{V_0 F_{total}^2 + V_0 P_0 (\frac{1}{\sqrt{K_{flow\ cell}}} + \frac{1}{\sqrt{K_{outflow}}})^2 - V_0 P_0 (\frac{1}{\sqrt{K_{flow\ cell}}} + \frac{1}{\sqrt{K_{outflow}}})^2}{F_{Total}^2 + P_0 (\frac{1}{\sqrt{K_{flow\ cell}}} + \frac{1}{\sqrt{K_{outflow}}})^2}$$

$$V_0 - V = \frac{V_0 F_{total}^2}{F_{total}^2 + P_0 (\frac{1}{\sqrt{K_{flow\ cell}}} + \frac{1}{\sqrt{K_{outflow}}})^2}$$

the time for switching the flow rate is denoted as t, the following equation can be obtained:

$$t = \frac{\Delta V}{F_{pump\ average}}$$

$$= \frac{V_0 - V}{F_{flow\ cell} + F_{outflow}}$$

$$= \frac{V_0 F_{total}^2}{F_{total}^2 + P_0 (\frac{1}{\sqrt{K_{flow\ cell}}} + \frac{1}{\sqrt{K_{outflow}}})^2} / F_{total}$$

$$= \frac{V_0 F_{total}}{F_{total}^2 + P_0 (\frac{1}{\sqrt{K_{flow\ cell}}} + \frac{1}{\sqrt{K_{outflow}}})^2}$$

$$= \frac{V_0 (F_{flow\ cell} + F_{outflow})}{(F_{flow\ cell} + F_{outflow})^2 + P_0 (\frac{1}{\sqrt{K_{flow\ cell}}} + \frac{1}{\sqrt{K_{outflow}}})^2}$$

where $\Delta V$ is a change in gas volume, $V$ is a current gas volume, and $V_0$ is an initial gas volume in the second container 220, which are all in cubic meters ($m^3$); $P_0$ is an initial pressure in Pascal Pa; $F_{flow\ cell}$ is a flow rate of (the sheath fluid) in the flow path from the second container 220 to the flow cell, and $F_{outflow}$ is a flow rate of (the sheath fluid) in the outflow line 230, both in milliliters per minute; and $K_{flow\ cell}$ and $K_{outflow}$ are the flow resistance to the flow towards the flow cell and the flow resistance on the outflow line 230, respectively.

Therefore, during the change from the first flow rate to the second flow rate, the smaller the initial volume $V_0$ of the gas is, the greater the flow rate in the outflow line 230 is, and the shorter the switching time t is. In a specific example, when the flow rate of the fluid flowing towards the flow cell 110 changes from 5 milliliters per minute to 10 milliliters per minute, the switching time may be controlled to be less than 5 minutes, thereby significantly speeding up the sample treatment. In a preferred embodiment, in this case, the flow rate in the outflow line 230 is 1.5 times to 5 times of the flow rate of the fluid flowing towards the flow cell 110. It should be understood that when the flow rate of the fluid flowing towards the flow cell 110 changes from 10 milliliters per minute to 5 milliliters per minute (i.e., the flow rate is halved), the switching time may also be controlled to be less than 5 minutes, although switching for increasing the flow rate is more common in actual operation.

In addition, if the flow resistance $K_{outflow}$ of the outflow line 230 is less than the flow resistance in the flow path to the flow cell 110, a pressure change $\Delta P$ in the second container 220 is almost caused by the outflow line 230. In the case of a higher flow rate (e.g., 10-15 milliliters per minute), the fluctuation of the flow rate of the fluid flowing towards the flow cell 110 can be suppressed (see FIG. 5 for details).

FIG. 3 is a schematic diagram showing the fluctuation or change, as a function of time, of the flow rate in the peristaltic pump 240 having six rollers at different speeds according to an embodiment of the present invention. Since there are a large number of detection points, they are superimposed as gray blocks in FIG. 3, but it can still be seen that the amplitude of fluctuation around the average flow rate is large, especially at a higher flow rate.

FIG. 4 is a graph of the flow rate (in microliter per minute) of the flow cell 110 (when the pump speed is 1.6 rps) as a function of time according to an embodiment of the present invention. In this embodiment, no gas such as air is sealed in the second container 220, for example, the second container 220 is in communication with the atmosphere, for example, is directly open, but the second part of sheath fluid flows out of the second container 220, for example, returns to the first container 210. As can be seen, compared with the prior art in which the peristaltic pump 240 is used to directly pump the sheath fluid from the first container 210 to the flow cell 110, the fluctuation of the flow rate in the flow cell 110 is reduced, that is, less than the amplitude of fluctuation of the pump flow rate in the peristaltic pump 240, but a certain degree of fluctuation can still be seen.

FIG. 5 is a graph showing the flow rate in the flow cell 110 and the flow rate in the outflow line 230 (both in milliliter per minute) as a function of time at different pump speeds according to an embodiment of the present invention, where the upper curve shows $F_{outflow}$, and the lower curve shows $F_{flow\ cell}$. In this embodiment, no gas such as air is sealed in the second container 220, and the second part of sheath fluid flows out from the second container 220, for example, into the first container 210. As can be seen, within a large range of flow rate from 0.5 milliliters per minute to 15 milliliters per minute, $F_{flow\ cell}$ remains at a fairly stable flow rate, that is, the flow rate fluctuates little, and $F_{outflow}$ remains stable at a lower flow rate, but still exhibits certain flow rate fluctuation at a higher flow rate. That is to say, the fluctuation of the pump flow rate is at least partially "absorbed" by the outflow line 230, such that the flow rate of the fluid flowing towards the flow cell 110 is fairly stable (i.e., the deviation meets a predetermined small threshold, for example, less than 1%).

FIG. 6 is a graph showing the flow rate (in microliter per minute) of the flow cell 110 at different pump speeds as a function of time according to an embodiment of the present invention, where the upper curve shows $F_{flow\ cell}$ at a pump speed of 1.0 rps, and the lower curve shows $F_{flow\ cell}$ at a pump speed of 0.6 rps. As shown, at both pump speeds, the flow rate in the flow cell 110 is fairly stable. Especially when compared with the flow rate fluctuation of the pump at speeds of 1.0 rps and 0.6 rps shown in FIG. 3 and the flow rate fluctuation of the $F_{flow\ cell}$ shown in FIG. 4, the fluctuation of $F_{flow\ cell}$ is almost negligible, and the relative standard deviation of the flow rate can reach 0.5% or below.

Assuming that the average pressure of the peristaltic pump 240 is 0-0.2 MPa, the table below shows, under the conditions of different initial gas pressures in the second container 220 and different flow ratios between the outflow line 230 and the flow cell 110, the flow rate fluctuation (denoted as $\frac{dF}{F}$) of the fluid (flowing towards) the flow cell 110, the relative standard deviations of the flow rates (estimated as one-quarter of the flow fluctuation), and the time required to reach $F_{flow\ cell}$ (5 milliliters per minute or 10 milliliters per minute in Table 1).

Table 1: Estimated RSD and switching time under the conditions of designed air volume and flow ratio

|  | $F_{flow\ cell}$ (milliliter per minute) | $F_{outflow}$ (milliliter per minute) | Air volume (milliliter) | Estimated pressurized air volume (milliliter) | $\frac{dF}{F}(\%)$ | Estim ated RSD (%) | Time (minute) |
|---|---|---|---|---|---|---|---|
| 1 | 5 | 7.5 | 10 | 5 | 2.08 | 0.69 | 0.4 |
| 2 | 10 | 1.5 | 10 | 5 | 4.17 | 1.39 | 0.2 |
| 3 | 5 | 25 | 150 | 75 | 0.33 | 0.11 | 2.5 |
| 4 | 10 | 50 | 150 | 75 | 0.67 | 0.22 | 1.25 |

Although various embodiments of the present invention have been described with reference to examples based on the structure of a flow cytometer in the accompanying drawings, it should be understood that the embodiments within the scope of the present invention can be applied to cell detection and analysis systems or methods with similar structures and/or functions.

The foregoing description has presented numerous features and advantages, including various alternative embodiments, as well as details of the structure and function of the apparatus and methods. The intention herein is to be illustrative, not exhaustive or restrictive.

It will be apparent to those skilled in the art that various modifications can be made within the full scope indicated by the broad generic meaning of the terms expressed in the appended claims, particularly in terms of structure, materials, elements, components, shapes, sizes, and the arrangement of components, including combinations of these aspects within the scope of the principles described herein. To the extent that these various modifications do not depart from the spirit and scope of the appended claims, they are meant to be included herein.

**Claims**

1. A sheath fluid supply system for a flow cytometer, comprising:

a first container configured to contain sheath fluid;
a supply line arranged between the first container and a flow cell, wherein the supply line includes a first line and a second line;
a peristaltic pump configured to pump the sheath fluid;
a buffer module which includes:

a second container with a predetermined volume of gas sealed inside, wherein the first line is arranged to allow the first container to be in fluid communication with the second container, and the second line is arranged to allow the second container to be in fluid communication with the flow cell, the peristaltic pump is arranged on the first line to pump the sheath fluid from the first container to the second container, and a first part of the sheath fluid in the second container flows towards the flow cell via the second line;
an outflow line, one end of which is connected to the second container such that while the first part of the sheath fluid flows towards the flow cell, a second part of the sheath fluid in the second container flows out of the second container through the outflow line;
wherein, during pumping of the peristaltic pump, a flow rate of the second part of the sheath fluid is greater than a flow rate of the first part of sheath fluid.

2. The sheath fluid supply system according to claim 1, wherein the other end of the outflow line that is away from the second container extends into the first container to allow the second part of the sheath fluid to flow into the first container.

3. The sheath fluid supply system according to claim 1, wherein the other end of the outflow line that is away from the second container is in communication with atmosphere.

4. The sheath fluid supply system according to claim 1, wherein the outflow line is designed such that the flow rate of the second part of the sheath fluid is 1.5 to 5 times of the flow rate of the first part of sheath fluid, or the outflow line is designed such that the flow rate of the second part of the sheath fluid accounts for 60% to 90% of a total flow rate of the sheath fluid pumped into the second container by the peristaltic pump.

5. The sheath fluid supply system according to claim 1, wherein the predetermined volume accounts for 4%-60% of a total volume of the second container.

6. The sheath fluid supply system according to claim 1, wherein the second container is provided with an inflow port in a sheath fluid-containing section thereof, the first line is arranged to extend into the second container via the inflow port, and an end of the first line within the second container is located in a gas-sealed section of the second container, and the sheath fluid flows into the second container from the end.

7. The sheath fluid supply system according to claim 1, wherein the second container is provided with a first outflow port in the sheath fluid-containing section thereof, and the outflow line extends out of the second container from the first outflow port.

8. The sheath fluid supply system according to claim 1, wherein the second container is provided with a second outflow port in the sheath fluid-containing section thereof, and the second line extends from the second outflow port.

9. The sheath fluid supply system according to claim 6, wherein the first container includes an outflow port disposed at its bottom, the first line extends from the outflow port to the inflow port of the second container, and a first filtering device is provided at the outflow port of the first container for filtering the sheath fluid flowing towards the peristaltic pump.

10. The sheath fluid supply system according to claim 8, wherein a second filtering device is provided at the second outflow port of the second container for filtering the sheath fluid flowing from the second container towards the flow cell.

11. A flow cytometer, comprising the sheath fluid supply system according to any one of claims 1-10 and a flow cell, the sheath fluid supply system configured to supply a sheath fluid to the flow cell.

12. A method for supplying a sheath fluid to a flow cell of a flow cytometer, wherein the flow cytometer includes a first container and a second container which are configured to contain the sheath fluid, and a peristaltic pump arranged between the first container and the second container, wherein a predetermined volume of gas is sealed inside the second container,

the method comprises: pumping the sheath fluid from the first container to the second container by the peristaltic pump, such that while a first part of the sheath fluid in the second container flows towards the flow cell, a second part of the sheath fluid in the second container flows from the second container towards the first container or a sheath fluid collection device, wherein during pumping of the peristaltic pump, a flow rate of the second part of the sheath fluid is greater than a flow rate of the first part of sheath fluid.

13. The method according to claim 12, wherein the flow cytometer includes an outflow line, such that while the first part of the sheath fluid flows towards the flow cell, the second part of the sheath fluid flows out of the second container via the outflow line, wherein an end of the outflow line away from the second container is in communication with the atmosphere or extends into the sheath fluid.

14. The method according to claim 12, wherein the flow rate of the second part of the sheath fluid is 1.5 to 5 times of the flow rate of the first part of sheath fluid, or the flow rate of the second part of the sheath fluid accounts for 60% to 90% of a total flow rate of the sheath fluid pumped into the second container.

15. The method according to claim 13, wherein the flow rate of the first part of the sheath fluid is changed by the peristaltic pump, and the predetermined volume or the flow resistance of the outflow line is designed such that a time required to double or halve the flow rate of the first part of sheath fluid is less than 5 minutes.

16. The method according to claim 12, wherein the flow rate of the first part of the sheath fluid is in a range of 0.5-15 milliliters per minute.

FIG. 1

FIG. 2

FIG. 3

FIG. 4

FIG. 5

FIG. 6

## INTERNATIONAL SEARCH REPORT

| International application No. |
|---|
| **PCT/CN2024/081924** |

**A. CLASSIFICATION OF SUBJECT MATTER**

G01N15/14(2024.01)i

According to International Patent Classification (IPC) or to both national classification and IPC

**B. FIELDS SEARCHED**

Minimum documentation searched (classification system followed by classification symbols)

IPC: G01N15 G01N33 F17D1 F04B49 F04B11

Documentation searched other than minimum documentation to the extent that such documents are included in the fields searched

Electronic data base consulted during the international search (name of data base and, where practicable, search terms used)

CNTXT, ENTXTC, VEN, ENTXT, CJFD, CNKI, 万方, WANFANG, Bing, Web of Science: 泵, 蠕动泵, 通道泵, 胶管泵, 脉动, 脉冲, 振荡, 波动, 缓冲, 阻尼, 稳, 流, 衰减, 减小, 消除, 抑制, 降低, 气体, 空气, 气压, 加压, 压力, 压缩, 进样, 进液, 供液, 供样, 提供, 供应, 泵送, 输送, 输运, 运输, 液, 容器, 腔, 池, 瓶, 室, 进口, 出口, 出流, 回流, 分流, 开口, 二, 两, 封闭, 密封, 密闭, pump, peristaltic pump, pulse, pulsation, attenuate, attenuating, damping, damper, fluid, liquid, flow, flowing, stable, air, gas, pressure, container, case, vessel, cavity, inlet, outlet, outlets, supply, shunt, two, twice, sealing, blocking

**C. DOCUMENTS CONSIDERED TO BE RELEVANT**

| Category* | Citation of document, with indication, where appropriate, of the relevant passages | Relevant to claim No. |
|---|---|---|
| PX | CN 115963050 A (THERMO FISHER SCIENTIFIC (SHANGHAI) INSTRUMENT CO., LTD.) 14 April 2023 (2023-04-14)<br>claims 1-16, description, paragraphs 10-94, and figures 1-6 | 1-16 |
| A | US 2015330385 A1 (CYTONOME/ST, LLC) 19 November 2015 (2015-11-19)<br>description, paragraphs 7-94, and figures 1-4 | 1-16 |
| A | CN 110031384 A (IRIS INTERNATIONAL, INC.) 19 July 2019 (2019-07-19)<br>entire document | 1-16 |
| A | CN 217981449 U (ZHEJIANG TAILIN ANALYTICAL INSTRUMENT CO., LTD.) 06 December 2022 (2022-12-06)<br>entire document | 1-16 |
| A | CN 201606659 U (SAIC-METZELER SEALING SYSTEMS CO., LTD.) 13 October 2010 (2010-10-13)<br>entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 May 2024** | **09 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/081924** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2021363979 A1 (LIFE TECHNOLOGIES CORP.) 25 November 2021 (2021-11-25)<br>        entire document | 1-16 |
| A | DE 102018110848 A1 (MHWIRTH GMBH) 07 November 2019 (2019-11-07)<br>        entire document | 1-16 |
| A | 李永涛 等 (LI, Yongtao et al.). "液压系统液体脉动抑制方法综述 (Non-official translation: Review of Methods for Suppressing Fluid Pulsation in Hydraulic Systems)"<br>机械工程学报 (Journal of Mechanical Engineering),<br>Vol. 58, No. 16, 31 August 2022 (2022-08-31),<br>ISSN: 0577-6686,<br>        pages 344-359 | 1-16 |

Form PCT/ISA/210 (second sheet) (July 2022)

## INTERNATIONAL SEARCH REPORT
### Information on patent family members

| International application No. |
| --- |
| **PCT/CN2024/081924** |

| Patent document cited in search report | | | Publication date (day/month/year) | Patent family member(s) | | | Publication date (day/month/year) |
| --- | --- | --- | --- | --- | --- | --- | --- |
| CN | 115963050 | A | 14 April 2023 | CN | 115963050 | B | 21 July 2023 |
| US | 2015330385 | A1 | 19 November 2015 | US | 10221844 | B2 | 05 March 2019 |
| CN | 110031384 | A | 19 July 2019 | EP | 2861956 | A2 | 22 April 2015 |
| | | | | EP | 2861956 | A4 | 20 April 2016 |
| | | | | EP | 2861956 | B1 | 24 January 2024 |
| | | | | JP | 2021060411 | A | 15 April 2021 |
| | | | | JP | 7084977 | B2 | 15 June 2022 |
| | | | | EP | 4332547 | A2 | 06 March 2024 |
| | | | | EP | 4332547 | A3 | 08 May 2024 |
| | | | | JP | 2020020797 | A | 06 February 2020 |
| | | | | JP | 6811292 | B2 | 13 January 2021 |
| | | | | JP | 2022113747 | A | 04 August 2022 |
| | | | | JP | 7406591 | B2 | 27 December 2023 |
| | | | | JP | 2015525343 | A | 03 September 2015 |
| | | | | EP | 3206010 | A1 | 16 August 2017 |
| | | | | EP | 3206010 | B1 | 21 February 2024 |
| | | | | TW | 201405116 | A | 01 February 2014 |
| | | | | DK | 3206010 | T3 | 08 April 2024 |
| | | | | JP | 2024023683 | A | 21 February 2024 |
| | | | | JP | 2017062247 | A | 30 March 2017 |
| | | | | JP | 6452660 | B2 | 16 January 2019 |
| | | | | WO | 2013181453 | A2 | 05 December 2013 |
| | | | | WO | 2013181453 | A3 | 13 February 2014 |
| | | | | CN | 110031384 | B | 10 March 2023 |
| | | | | CN | 107014741 | A | 04 August 2017 |
| | | | | CN | 107014741 | B | 20 July 2021 |
| | | | | CN | 104641217 | A | 20 May 2015 |
| | | | | CN | 104641217 | B | 22 February 2019 |
| | | | | CN | 116165124 | A | 26 May 2023 |
| | | | | JP | 2015525343 | W | 03 September 2015 |
| | | | | US | 2017038291 | A1 | 09 February 2017 |
| | | | | US | 2017307506 | A1 | 26 October 2017 |
| | | | | US | 2018059000 | A1 | 01 March 2018 |
| | | | | US | 2018059001 | A1 | 01 March 2018 |
| | | | | US | 10126227 | B2 | 13 November 2018 |
| | | | | US | 10209174 | B2 | 19 February 2019 |
| | | | | US | 2022113241 | A1 | 14 April 2022 |
| | | | | US | 10330582 | B2 | 25 June 2019 |
| CN | 217981449 | U | 06 December 2022 | None | | | |
| CN | 201606659 | U | 13 October 2010 | None | | | |
| US | 2021363979 | A1 | 25 November 2021 | KR | 20220062402 | A | 16 May 2022 |
| | | | | WO | 2021236465 | A1 | 25 November 2021 |
| | | | | US | 11802551 | B2 | 31 October 2023 |
| | | | | JP | 2022551158 | A | 07 December 2022 |
| | | | | JP | 7342255 | B2 | 11 September 2023 |
| | | | | EP | 3947970 | A1 | 09 February 2022 |
| | | | | EP | 3947970 | B1 | 20 March 2024 |
| | | | | CN | 114599879 | A | 07 June 2022 |
| | | | | JP | 2022551158 | W | 07 December 2022 |

Form PCT/ISA/210 (patent family annex) (July 2022)

## INTERNATIONAL SEARCH REPORT
### Information on patent family members

International application No.

**PCT/CN2024/081924**

| Patent document cited in search report | Publication date (day/month/year) | Patent family member(s) | Publication date (day/month/year) |
|---|---|---|---|
| DE 102018110848 A1 | 07 November 2019 | None | |